# DEMANDE DE BREVET EUROPEEN

(11) **EP 4 431 553 A1**
(43) Date de publication de la demande: **18.09.2024**
(21) Numéro de dépôt: 24163770.1
(22) Date de dépôt: 15.03.2024
(51) Int. Cl.: C08J 5/24, B29B 17/00, C08J 11/22

(54) **RECYCLAGE DE MATÉRIAUX PRÉ-IMPREGNÉS FIBRÉS**

(30) Priorité: 15.03.2023 FR 2302377
(71) Demandeur: COMMISSARIAT À L'ÉNERGIE ATOMIQUE ET AUX ÉNERGIES ALTERNATIVES, 75015 Paris (FR)
(72) Inventeur: PILUSO, Pierre, 38054 Grenoble Cedex 09 (FR); TIQUET, Pascal, 38054 Grenoble Cedex 09 (FR)
(74) Mandataire: Germain Maureau

(57) **Abrégé**

Procédé de recyclage de matériaux pré-imprégnés comprenant les étapes de :
- a) fourniture d'au moins un matériau pré-imprégné comprenant une première résine en polymère thermodurcissable, partiellement réticulée, et une armure comprenant des fibres,
- b) application d'un mélange réactionnel de vitrimérisation sur l'au moins un matériau pré-imprégné,
- c) mise en place de l'au moins un matériau pré-imprégné enduit du mélange réactionnel de vitrimérisation sur un moule d'une forme prédéfinie,
- d) application d'une thermocompression sur l'au moins un matériau pré-imprégné à une température (T1) supérieure ou égale à la température de transition vitreuse (Tg) de la première résine, de sorte à activer la réaction entre le mélange réactionnel de vitrimérisation et le polymère thermodurcissable conduisant à la formation d'un polymère vitrimère et la transformation de l'au moins un matériau pré-imprégné en un matériau composite vitrimère de la forme prédéfinie.

## Description

La présente invention se rapporte au domaine des matériaux composites pré-imprégnés destinés à former des matériaux composites à renfort fibrés. En particulier, l'invention concerne un procédé de recyclage de matériaux composites pré-imprégnés hors d'usage sorte à en permettre le refaçonnage et/ou la réparation. Selon un deuxième aspect, l'invention concerne un matériau intermédiaire comprenant un matériau composite pré-imprégné enduit d'un mélange réactionnel de vitrimérisation, notamment obtenu à l'issue d'une étape intermédiaire du procédé de recyclage.

Les matériaux composites renforcés par des fibres sont principalement utilisés en remplacement des métaux pour l'allégement des structures, et ce dans une large gamme d'application : le sport (cycles, sport de glisse), le transport (structure de voitures, de trains), l'aérospatial (structure d'avions, de navettes spatiales). Ces systèmes sont constitués d'une résine polymère thermodurcissable, réticulée pendant la mise en forme du matériau, et d'un renfort, notamment une armure de fibres, pouvant être de nature (principalement des fibres de carbone, des fibres de verre, des fibres de polymères...) et d'organisation (tissées selon différents modèles, non-tissées) variable.

Une des manières de mettre en forme ces composites est de réaliser une pré-imprégnation de l'armure de fibres avec la résine non réticulée, de manière à obtenir un matériau composite pré-imprégné. Ce composite pré-imprégné est ensuite recouvert d'un film de protection connu sous la dénomination « backing », permettant de rouler le pré-imprégné et de le transporter en bobine jusqu'au lieu d'utilisation. En effet, la résine n'étant pas réticulée à ce stade, elle possède un caractère collant qui empêche d'empiler les pré-imprégnés et de les stocker ainsi avant utilisation. Au moment de l'utilisation, les rouleaux de pré-imprégnés sont découpés avec leur backing à la bonne dimension à partir des bobines, puis les feuilles de pré-imprégnés dépourvues de leur backing sont empilées de manière à obtenir l'épaisseur de composites voulue et sont pressées à chaud à la forme souhaitée. Lors de la chauffe, la résine réticule de manière irréversible, et le composite ainsi formé est ensuite démoulé.

Si l'utilisation de composites pré-imprégnés permet une forte simplicité de mise en oeuvre comme l'absence de manipulation de résine chez l'utilisateur et la possible découpe à façon, elle n'en comporte pas moins des défauts. Premièrement, la réaction de réticulation des résines des composites pré-imprégnés se produit à toute température, bien que plus la température soit basse, plus la réaction progresse lentement. Cela implique soit de stocker les rouleaux de matériaux pré-imprégnés dans des conditions spécifiques, via réfrigération typiquement, soit de les utiliser rapidement une fois reçus. Ainsi, en pratique, des longueurs et masses importantes de matériaux pré-imprégnés peuvent être perdues car ayant dépassé leur temps de vie conseillé par le fournisseur à une température de stockage donné, la réaction de réticulation a trop avancé pour permettre leur mise en forme. Il en résulte qu'une grande quantité de ces préimprégnés deviennent des déchets à l'origine d'un enjeu environnemental conséquent. En outre, le procédé de découpe des matériaux pré-imprégnés implique l'existence de chutes de découpe. Ces chutes trouvent actuellement difficilement des voies d'application, même si certaines commencent à émerger à des niveaux industriels, mais qui entrainent systématiquement une forte dévaluation de la matière et sont typiquement utilisées pour des biens de consommation. Un des buts de la présente invention vise à pallier au moins un des inconvénients précités. A cet effet, la présente invention propose un procédé de recyclage de matériaux pré-imprégnés comprenant les étapes de :
a) fourniture d'au moins un matériau pré-imprégné comprenant une première résine en polymère thermodurcissable, partiellement réticulée, et une armure comprenant des fibres,
b) application d'un mélange réactionnel de vitrimérisation sur l'au moins un matériau pré-imprégné,
c) mise en place de l'au moins un matériau pré-imprégné enduit du mélange réactionnel de vitrimérisation sur un moule d'une forme prédéfinie,
d) application d'une thermocompression sur l'au moins un matériau pré-imprégné à une température T1 supérieure ou égale à la température de transition vitreuse Tg de la première résine, de sorte à activer la réaction entre le mélange réactionnel de vitrimérisation et le polymère thermodurcissable conduisant à la formation d'un polymère vitrimère et la transformation de l'au moins un matériau pré-imprégné en un matériau composite vitrimère de la forme prédéfinie.

Grâce au procédé de l'invention, il est possible de recycler des matériaux pré-imprégnés, dont la première résine, est en partie réticulée et qui est hors d'état d'usage pour des raisons de vieillissement (conditions de stockage dans des conditions ne permettant pas d'éviter la réticulation partielle de la première résine et/ou la durée de stockage donnée par le fournisseur est dépassée) ou qui provient des chutes des découpes d'un pré-imprégné. Il est en effet possible de réaliser une remise en forme à chaud ou de réparer localement la première résine en utilisant un mélange réactionnel de vitrimérisation qui utilise une chimie dynamique covalente conduisant à des vitrimères dont les propriétés viscoélastiques sont semblables à celles du verre. Ainsi, l'application d'une force mécanique à une température T1 au-dessus ou égale à la température de transition vitreuse Tg du polymère vitrimère permet de ramollir les pré-imprégnés pour les refaçonner ou les réparer.

Selon une disposition, la température T1 est comprise entre 180 et 280°C.

Par les termes 'recyclage' ou 'recycler' on entend la remise en forme et/ou la réparation de fissure(s) apparue(s) dans la première résine du pré-imprégné pour une nouvelle utilisation et l'obtention d'un matériau composite vitrimère qui pourra être remodelé ou refaçonné à son tour par la présence de la résine vitrimère.

La terminologie relative à une première résine en polymère thermodurcissable, 'partiellement réticulée' est bien connue par l'homme de l'art des matériaux polymère et pré-imprégnés comme étant une résine qui conserve des fonctions accessibles pour une réticulation ou pour une réaction annexe, ici une réaction d'échange pour une vitrimérisation.

En particulier, dans les résines époxy-amine partiellement réticulées, il reste des fonctions amines disponibles. Ce sont ces dernières qui permettent les réactions d'échange. Il reste également des fonctions époxy disponibles, mais celles-ci peuvent directement réagir avec les anhydrides ajoutés. De plus, ces résines partiellement réticulées sont encore solubles dans certains solvants, par exemple le DMF, ce qui n'est pas le cas lorsque la réticulation est complète. Il est notamment possible de dissoudre entre environ 30% et 50% en masse dans le DMF en 24h à température ambiante de la première résine du pré-imprégné de l'étape a) du procédé. Cette première résine partiellement réticulée pourra conduire de façon efficace à la vitrimérisation.

La mise en place du matériau pré-imprégné dans le moule d'une forme prédéfinie, pouvant être un plateau de presse, comprend le positionnement d'un ou plusieurs matériaux pré-imprégnés sur le moule de façon à orienter les fibres de manière voulue et à superposer plusieurs matériaux pré-imprégnés jusqu'à atteindre l'épaisseur de matériau composite souhaitée.

Selon une possibilité, le procédé de recyclage comprend les étapes de :
- e) disposition du matériau composite vitrimère mis en forme selon l'étape d) sur un deuxième moule d'une conformation déterminée, et
- f) application d'une thermocompression sur le matériau composite vitrimère à ladite température T1 de sorte à refaçonner le matériau composite vitrimère.

Il est ainsi possible de donner une seconde vie au matériau composite vitrimère sans dévaluation ni diminution des propriétés mécaniques du matériau initial. Par les expressions 'refaçonner' ou 'refaçonnage' il est entendu un remodelage, une re-mise en forme dans une autre conformation ou réparer des défauts, tels que des fissures apparues dans la résine vitrimère. Ceci s'obtient par le ramollissement de la résine vitrimère et l'application d'une pression sur le composite. Selon une disposition, le mélange réactionnel de vitrimérisation comprend des composés précurseurs d'une deuxième résine, tel qu'un système époxy-amine, époxy-anhydride, époxy-phénol ou un système époxy-disulfure, et un catalyseur de transformation en résine vitrimère, choisi parmi un composé organométallique ou organique, par exemple respectivement de l'acétate de zinc ou une amine ternaire.

Cette composition permet l'échange thermoactivé de fonctions dans la première résine initiale qui conduit à la transformation en vitrimère dont la structure interne est une forme particulière de réticulation, dite «dynamique » ou « réversible », où les liaisons covalentes entre macromolécules peuvent être défaites et refaites, avec possibilité d'interchanger certaines molécules; leur réseau chimique interne est permanent mais sa topologie peut être réorganisée grâce à des réactions d'échange qui maintient le nombre de liaisons constant.

De manière concrète, le mélange réactionnel de vitrimérisation présente une viscosité maximale de 2 Pa·s (2000 cP) de sorte à pouvoir enduire le matériau pré-imprégné de façon uniforme.

Selon une possibilité, la deuxième résine comprend des groupements hydroxyles accessibles, de sorte à permettre des réactions d'échange de fonction avec la première résine thermodurcissable.

De manière concrète, le rapport molaire des fonctions époxydes sur les fonctions l'anhydride est d'au moins 1. Ainsi, la stoechiométrie des composés précurseurs de la deuxième résine est telle que l'ensemble des groupements époxydes peut réagir, de sorte qu'il reste sur le réseau des groupements hydroxyles accessibles.

Selon une caractéristique, la proportion de catalyseur de transformation est comprise entre 2 à 15% en poids du mélange réactionnel.

Le catalyseur de transformation en résine vitrimère peut également jouer le rôle d'accélérateur de réticulation du polymère thermodurcissable du pré-imprégné. Il s'ensuit une accélération de la vitrimérisation.

De manière concrète, l'application du traitement thermique de l'étape d) est par exemple réalisée dans une plage de température T1 allant de 160°C à 280°C. Cette plage de température varie selon la température de transition vitreuse Tg qui est liée à la nature du polymère thermodurcissable mais également aux fibres utilisées et à la nature du catalyseur de transformation en résine vitrimère. La température maximale de la plage de température T1 est déterminée par la température de dégradation des composés (typiquement observée en analyse ATG). La volatilité et la stabilité des composants de la formulation de vitrimérisation peuvent également limiter cette température maximale.

Selon une caractéristique, la pression utilisée à l'étape d) est comprise dans une plage allant de 2 à 20 MPa. La valeur de la pression optimale dépend de la forme, de la qualité de surface, et de la vitesse de vitrimérisation souhaitée. Une pression élevée améliore la vitrimérisation (les liaisons covalentes sont plus proches ou « plus en contact » et peuvent mieux s'échanger).

Selon une disposition, l'application du mélange réactionnel est réalisée par pulvérisation sur l'au moins un matériau pré-imprégné. Par exemple, le mélange réactionnel et sa pulvérisation sont réalisés dans une plage de température indépendante et comprise entre l'ambiante et 80°C sous atmosphère inerte ou à l'air, et bien entendu à une température inférieure à celle de la réticulation. Le débit de la pulvérisation manuelle ou automatique peut être comprise entre 0.01-0.1 mL/cm²/s. Selon ce mode de réalisation, la composition du mélange réactionnel comprend en outre des additifs pour adapter le mélange à la méthode d'application par pulvérisation. Les additifs sont notamment des diluants ou des additifs rhéo-épaississant. Cette méthode d'application permet avantageusement de bien contrôler la quantité de mélange appliqué.

Selon une variante de réalisation, l'application du mélange réactionnel de vitrimérisation est réalisée par :
- i) trempage de l'au moins un matériau pré imprégné dans un bain de mélange réactionnel de vitrimérisation pour une enduction dudit au moins un matériau pré-imprégné,
- ii) filtration du mélange réactionnel de vitrimérisation, et récupération dudit au moins un matériau pré-imprégné enduit.

Après filtration et séchage, les pré-imprégnés enduits pourront être stockés sans condition de température, utilisés tel quel, ou transportés sur leur lieu de mise en forme.

Selon une réalisation particulière, la première résine de l'au moins un matériau pré-imprégné est en polymère époxy-amine, notamment du DGEBA pour la partie époxy et l'amine est choisie parmi de la diéthylènetétramine, une polyétheramine, une amine aromatique ou un mélange de ces composés, et le mélange réactionnel de vitrimérisation est constitué de DGEBA, (acronyme anglo-saxon de Bisphénol A diglycidyl éther), d'anhydride phtalique, d'acétate de zinc, et un solvant en acétone. Ces composés réactifs du mélange réactionnel sont disponibles auprès du fournisseur Sigma-Aldrich.

Selon un autre exemple, la première résine de l'au moins un matériau pré-imprégné est en résine phénolique, notamment un mélange de cardanol pour le phénol, de l'acide citrique, et du formaldéhyde, et le mélange réactionnel de vitrimérisation est constitué de DGEBA, (acronyme anglo-saxon de Bisphénol A diglycidyl éther), d'anhydride phtalique, d'acétate de zinc, et un solvant en acétone.

Le procédé est également applicable à d'autres résines, telles que par exemple des :
- résines polyester (époxy-anhydride),
- résines BMI (bismaléimide), et
- résines cyanate ester.

Selon une disposition, le procédé comprend en outre les étapes de recyclage total de :
- g) disposer le matériau composite vitrimère dans une composition comprenant au moins un alcool monofonctionnel,
- h) appliquer un traitement thermique à une température T2 supérieure ou égale à Tg de sorte à permettre la dissolution de la résine vitrimère et la récupération des fibres de l'armure de sorte à recycler les composés du matériau composite vitrimère.

Ainsi traité, le matériau composite vitrimère est recyclé et ses fibres récupérées peuvent être réutilisées. De préférence, le matériau composite vitrimère est totalement recyclé.

Selon un deuxième aspect, l'invention propose en outre un matériau intermédiaire, pouvant notamment être obtenu à l'issu de l'étape b), ou ii) du procédé de recylage, le matériau intermédiaire comprenant un matériau pré-imprégné enduit comportant une première résine en polymère thermodurcissable partiellement réticulée, une armure comprenant des fibres, la première résine étant enduite d'un mélange réactionnel de vitrimérisation adapté à la vitrimérisation du polymère thermodurcissable lors de l'application d'un traitement thermique à une température T1 supérieure ou égale à la température Tg de transition vitreuse du polymère thermodurcissable. Ce matériau intermédiaire présente l'avantage de pouvoir être réuitilisé comme tel dans une étape de refaçonnage pour conduire à un matériau composite vitrimère, être stocké ou être transporté sur le lieu de mise en forme sans condition de durée ni de température de stockage. L'application d'une température Tg suffit à la vitrimérisation de la première résine themodurcissable. Elle est peut être appliquée conjointement à une compression permettant d'obtenir un matériau composite de très grande qualité fortement chargé avec une fraction volumique de fibre importante.

Selon d'autres caractéristiques, le procédé de recyclage de l'invention comporte une ou plusieurs des caractéristiques optionnelles suivantes considérées seules ou en combinaison :
- L'étape d) de thermocompression est réalisée sur une durée allant de 3 à 30 minutes.
- Le matériau pré-imprégné est une pièce en trois dimensions, par ex un film, un revêtement.
- L'armure est constituée de fibres de carbone.
- L'armure est constituée de fibres de verre.
- L'armure est constituée de fibres de naturelles notamment des fibres de cellulose de diverses origines, chitosane.
- L'armure est constituée de fibres synthétiques notamment en PA, PET. Dans ce cas, les traitements thermiques utilisés dans le procédé sont limités par la température de fusion des fibres.
- Le moule d'une forme prédéfinie est différent ou identique au deuxième moule d'une conformation déterminée.
- Le système époxy-disulfure utilisé dans le mélange réactionnel de vitrimérisation comprend un disulfure choisi parmi le 2-aminophényl disulfure, et les composés porteurs de liaisons silyl éthers tel que le 1,3-bis(3-aminopropyl)-1,1,3,3-tétramethyl disiloxane.

D'autres caractéristiques et avantages apparaitront à la lecture de la description détaillée ci-après, de deux exemples de mise en oeuvre non limitatifs, faite en référence aux figures annexées dans lesquelles :
[Fig. 1] représente un exemple de réaction d'échange de fonction ester par transestérification dans un réseau dynamique covalent selon un mode de réalisation de l'invention.
[Fig. 2] représente un exemple de réaction d'échange de fonctions disulfures dans un réseau dynamique covalent selon un autre mode de réalisation de l'invention.
[Fig. 3] représente un exemple de réaction d'échange de fonctions silyls ethers dans un réseau dynamique covalent selon encore un autre mode de réalisation de l'invention.
[Fig. 4] représente la composition d'un mélange réactionnel de vitrimérisation selon un mode de réalisation de l'invention.
[Fig. 5] représente une première étape de la réaction anhydride-époxy à partir d'un alcool.
[Fig. 6] illustre une deuxième étape de la réaction anhydride-époxy du mélange réactionnel de vitrimérisation.
[Fig. 7] illustre une réaction d'échange de fonction entre un système epoxy-anhydride partiellement réticulé et une amine libre présente dans le système epoxy-anhydride de vitrimérisation selon un mode de réalisation de l'invention.

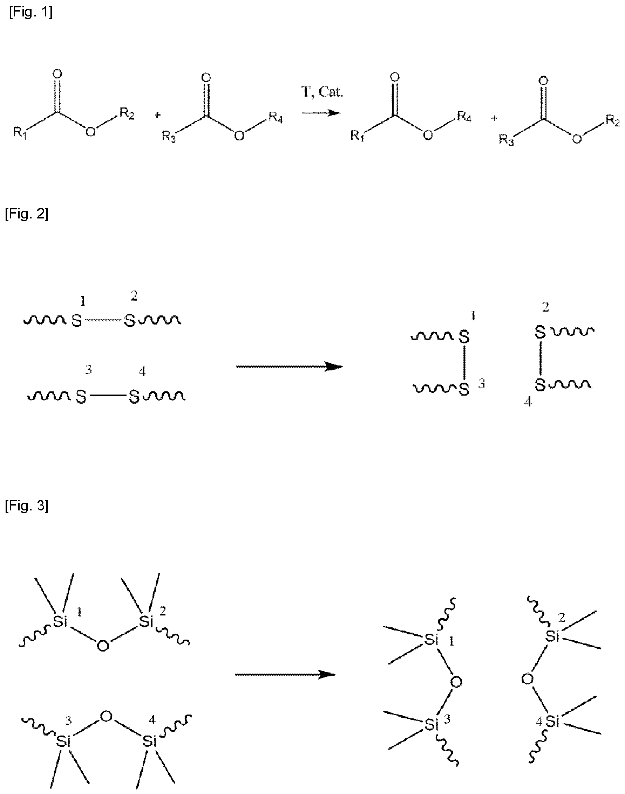

Comme on le verra dans les exemples détaillés ci-dessous, l'invention consiste à permettre la réutilisation de matériaux pré-imprégnés hors d'état d'usage pour des raisons de vieillissement (stockage hors des conditions idéales, stockage trop long), tel que des chutes de découpes. Pour ce faire, le procédé consiste à appliquer un mélange réactionnel de composés activateurs sur le matériau pré-imprégné qui s'intégrera à la première résine pré-imprégnée et permettra au matériau composite final d'avoir les caractéristiques d'un réseau dynamique covalent, capable de réactions d'échange de manière à permettre sa remise en forme à chaud, malgré un état de réticulation important, en tirant partie de l'usage de la chimie dynamique covalente. Les réseaux covalents dynamiques, ou réseaux vitrimères sont des réseaux de polymère réticulés ayant la particularité de posséder des caractéristiques de thermodurcissables à basse température et de thermoplastiques à haute température. Ces caractéristiques découlent de la présence de liaisons chimiques covalentes dynamiques, c'est-à-dire que des réactions d'échange peuvent se produire entre chaînes et réarranger la topologie du réseau, tout en maintenant un taux de réticulation constant (se rapporter à un exemple de réaction d'échange figure 1). Ces échanges sont contrôlés cinétiquement et ne peuvent se faire qu'une fois la température de transition vitreuse du polymère dépassée (conditionne la mobilité nécessaire aux réactions) et qu'une fois la température minimale pour que la réaction se fasse, liée à l'énergie d'activation de la réaction d'échange.

L'invention consiste donc à utiliser la réactivité résiduelle de la première résine réticulée de façon incomplète pour intégrer des motifs chimiques permettant l'obtention d'un réseau dynamique covalent. Les motifs rajoutés sont préférentiellement similaires à ceux de la première résine utilisée dans le pré-imprégné, comme les systèmes époxy-amine ou époxy-anhydride etc., ou peuvent être basés sur des chimies d'échange différentes disulfure, silyls éthers - figures 1 à 3))

Typiquement, les époxy amines créent des amines, les époxy anhydride créent des esters. Dans les deux cas, des liaisons disulfures ou silyl-ethers sont intégrées dans le réseau époxy-amine existant. Cela peut se faire notamment en ajoutant des précurseurs porteurs de groupements réactifs avec les époxy ou les amines existantes dans la première résine partiellement réticulées (ex : alcools ou amines pouvant réagir avec epoxy, anhydrides, epoxy pouvant réagir avec les amines)

Typiquement, si des liaisons disulfures sont souhaitées, on peut faire réagir un composé portant un pont disulfure et au moins deux amines ou alcools pour qu'il soit intégré à la résine existante et joue le rôle de réticulant dynamique.

### Exemple de réalisation 1 : application d'un mélange réactionnel de vitrimérisation par imprégnation via un bain de solvant.

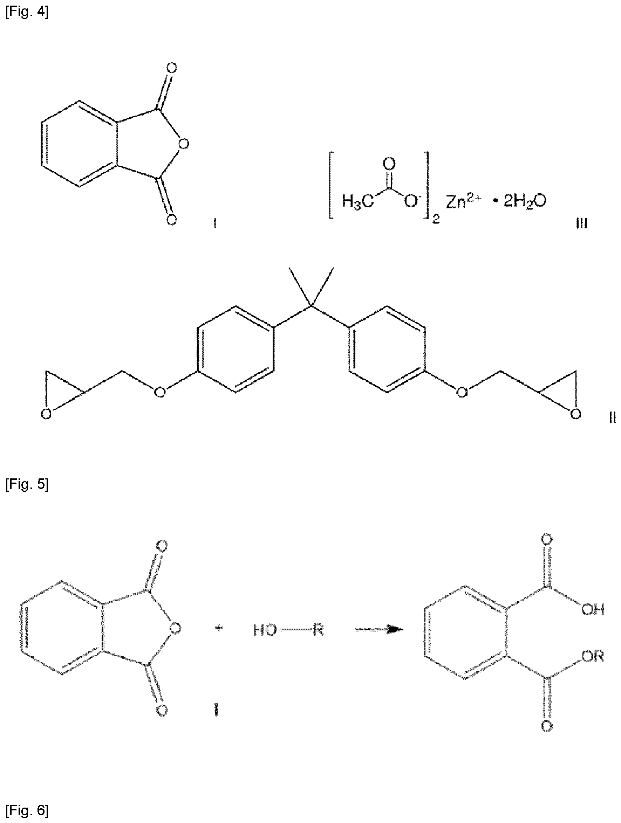

Un mélange réactionnel de vitrimérisation (figures 4 à 6) est formé à partir de :
- 500 ml d'acétone,
- 25 g de l'époxy DGEBA II (0,073 mol),
- 16 g d'anhydride phtalique I (0,108 mol), et
- 10 g d'acétate de zinc III (0,045 mol)

Puis 50 g de matériaux pré-imprégnés renforcés de fibres de carbone, basés sur une première résine époxy-amine, stockés à température ambiante depuis plus de 30 jours, de dimensions 1 cm par 2 cm, sont plongés dans le bain du mélange réactionnel décrit ci-dessus à pression et température ambiantes.

Après 24h d'immersion sous agitation légère à température ambiante, les matériaux pré-imprégnés sont filtrés du mélange réactionnel, puis séchés à l'ambiante 4h.

Deux matériaux pré-imprégnés sont ensuite placés l'un contre l'autre, puis entre 2 plaques en acier recouvertes de Téflon fibré. Le tout est placé dans une presse à chaud, chauffée à 240°C, sous 10 MPa de pression, durant une durée de 5 minutes. La pression est ensuite retirée, puis les deux matériaux pré-imprégnés sont récupérés. On observe alors une adhésion entre les deux matériaux pré-imprégnés, sans destruction apparente des structures fibreuses. La première résine thermodurcissable ayant maintenant réticulée et étant vitrimérisée, un matériau composite vitrimère est obtenu. Selon une autre possibilité, au moins deux pièces de matériaux pré-imprégnés sont juxtaposées deux à deux dans le moule de sorte à agrandir la surface du matériau composite vitrimère final. Selon encore une autre possibilité, au moins deux pièces de matériaux pré-imprégnés sont disposés les uns sur les autres de sorte à donner la forme et les propriétés visées au composite vitrimère final.

Le matériau composite vitrimère ainsi formé est ensuite refaçonné sous contrainte et température. L'assemblage de 2 pré-imprégnés est placé sur un moule comportant un angle à 90°C, et chauffé à 240°C. Une contrainte est progressivement appliquée au composite jusqu'à atteindre les 10 MPa. Le composite vitrimère est capable de se déformer sans casser jusqu'à épouser l'angle du moule. Il conserve cette forme après refroidissement.

Pour comparaison, lorsque 2 pièces de matériaux pré-imprégnés non préalablement immergées dans le mélange réactionnel de vitrimérisation sont compressées dans les mêmes conditions, de nombreuses craquelures sont visibles en surface du fait de déchaussement de la résine réticulée des fibres.

### Exemple de réalisation 2 : application du mélange réactionnel de vitrimérisation par pulvérisation

Un mélange réactionnel de vitrimérisation (figures 4 à 6) est formé à partir de :
- 50 ml d'acétone,
- 25 g de DGEBA II (0,073 mol)
- 16 g d'anhydride phtalique I (0,108 mol) et
- 10 g d'acétate de zinc III (0,045 mol)

Cette solution est ensuite déposée par pulvérisation sur les surfaces de deux matériaux pré-imprégnés renforcés de fibre de carbone, basés sur une première résine époxy-amine, stockés à température ambiante depuis plus de 30 jours, de dimensions 1 cm par 2 cm.

Les deux matériaux pré-imprégnés sont ensuite compressés à chaud comme décrit dans l'exemple 1. Un matériau composite vitrimère est obtenu, sans présence de défauts, craquelures, ou rupture de fibres. Il peut être remodelé dans un deuxième moule d'une conformation prédéfinie pour son application future.

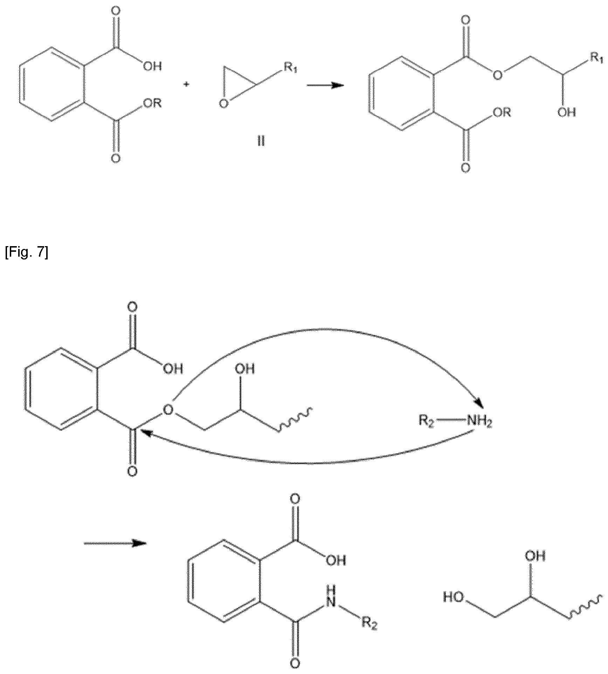

Selon d'autres possibilités non décrites dans les exemples détaillés, le mélange réactionnel de vitrimérisation peut être constitué d'autres systèmes permettant les échanges de fonction et une chimie dynamique covalente, tels que les systèmes époxy/phénol, époxy/amine (figure 7), époxy/disulfure.

Ainsi, la présente invention présente l'avantage de permettre la réutilisation de matériaux pré-imprégnés hors d'usage ou de chutes de découpe et notamment l'obtention d'un matériau composite vitrimère pouvant être remis en forme plusieurs fois durant sa durée de vie. L'invention permet donc, par un procédé simple à mettre en oeuvre et peu coûteux, la réutilisation de déchets de pré-imprégnés peu valorisés ainsi que l'obtention, avec ces déchets, d'un matériau composite totalement recyclable, au contraire des procédés existants.

## Revendications

1. Procédé de recyclage de matériaux pré-imprégnés comprenant les étapes de :
- a) fourniture d'au moins un matériau pré-imprégné comprenant une première résine de polymère thermodurcissable, partiellement réticulée, et une armure comprenant des fibres,
- b) application d'un mélange réactionnel de vitrimérisation sur l'au moins un matériau pré-imprégné,
- c) mise en place de l'au moins un matériau pré-imprégné enduit du mélange réactionnel de vitrimérisation sur un moule d'une forme prédéfinie,
- d) application d'une thermocompression sur l'au moins un matériau pré-imprégné à une température (T1) supérieure ou égale à la température de transition vitreuse (Tg) de la première résine, de sorte à activer la réaction entre le mélange réactionnel de vitrimérisation et le polymère thermodurcissable conduisant à la formation d'un polymère vitrimère et la transformation de l'au moins un matériau pré-imprégné en un matériau composite vitrimère de la forme prédéfinie.

2. Procédé de recyclage selon la revendication 1 comprenant les étapes de:
- e) disposition du matériau composite vitrimère mis en forme selon l'étape d) sur un deuxième moule d'une conformation déterminée,
- f) application d'une thermocompression sur le matériau composite vitrimère à ladite température (T1) de sorte à refaçonner le matériau composite vitrimère.

3. Procédé de recyclage selon l'une des revendications précédentes, dans lequel le mélange réactionnel de vitrimérisation comprend des réactifs précurseurs de sorte à former une deuxième résine comprenant des groupements hydroxyles accessibles de sorte à permettre des réactions d'échange de fonction avec la première résine de polymère thermodurcissable.

4. Procédé de recyclage selon l'une des revendications précédentes, dans lequel le mélange réactionnel de vitrimérisation comprend des réactifs précurseurs d'une deuxième résine, tel qu'un système époxy-amine, époxy-anhydride, ou un système époxy-disulfure, et un catalyseur (III) de transformation en résine vitrimère, choisi parmi un composé organométallique ou organique, par exemple respectivement de l'acétate de zinc (III) ou une amine ternaire.

5. Procédé de recyclage selon la revendication 4, dans lequel la proportion de catalyseur (III) est comprise entre 2 à 15% en poids du mélange réactionnel de vitrimérisation.

6. Procédé de recyclage selon l'une des revendications précédentes, dans lequel l'application du mélange réactionnel de vitrimérisation est réalisée par pulvérisation sur l'au moins un matériau pré-imprégné.

7. Procédé de recyclage selon l'une des revendications 1 à 5, dans lequel l'application du mélange réactionnel de vitrimérisation est réalisée par :
- i) trempage de l'au moins un matériau pré imprégné dans un bain de mélange réactionnel de vitrimérisation pour une enduction dudit au moins un matériau pré-imprégné,
- ii) filtration du mélange réactionnel de vitrimérisation, et récupération dudit au moins un matériau pré-imprégné enduit.

8. Procédé de recyclage selon l'une des revendications 1 à 7, dans lequel la première résine de l'au moins un matériau pré-imprégné est en polymère époxy-amine et le mélange réactionnel de vitrimérisation est constitué de DGEBA (II), d'anhydride phtalique (I), d'acétate de zinc (III), et un solvant en acétone.

9. Procédé de recyclage selon l'une des revendications précédentes, lequel comprend les étapes de recyclage total de :
- g) disposer le matériau composite vitrimère dans une composition comprenant au moins un alcool monofonctionnel,
- h) appliquer un traitement thermique à une température (T2) supérieure ou égale à (Tg) de sorte à permettre la dissolution de la résine vitrimère et la récupération des fibres de l'armure de sorte à recycler les composés du matériau composite vitrimère.

10. Matériau intermédiaire comprenant un matériau pré-imprégné enduit comportant une première résine en polymère thermodurcissable partiellement réticulée, une armure comprenant des fibres, la première résine étant enduite d'un mélange réactionnel de vitrimérisation adapté à la vitrimérisation du polymère thermodurcissable lors de l'application d'un traitement thermique à une température (T1) supérieure ou égale à la température (Tg) de transition vitreuse du polymère thermodurcissable.
